# EUROPÄISCHE PATENTSCHRIFT

(11) **EP 4 049 332 B1**
(45) Veröffentlichungstag und Bekanntmachung des Hinweises auf die Patenterteilung: **03.04.2024**
(21) Anmeldenummer: 20786548.6
(22) Anmeldetag: 06.10.2020
(51) Int. Cl.: H01M 10/04

(54) **ELEKTRISCHER ENERGIESPEICHER UND VERFAHREN ZUM BETREIBEN EINES ELEKTRISCHEN ENERGIESPEICHERS**
ELECTRICAL ENERGY STORE AND METHOD FOR OPERATING AN ELECTRICAL ENERGY STORE
ACCUMULATEUR D'ÉNERGIE ÉLECTRIQUE ET PROCÉDÉ POUR FAIRE FONCTIONNER UN ACCUMULATEUR D'ÉNERGIE ÉLECTRIQUE

(30) Priorität: 23.10.2019 DE 102019007363
(43) Veröffentlichungstag der Anmeldung: 31.08.2022
(73) Patentinhaber: Mercedes-Benz Group AG, 70372 Stuttgart (DE)
(72) Erfinder: ROTHENBURGER, Holger, 74348 Lauffen (DE); MÜLBERGER, Anselm, 73249 Wernau (Neckar) (DE)
(74) Vertreter: Novagraaf Group
(86) Internationale Anmeldenummer: PCT/EP2020/077994
(87) Internationale Veröffentlichungsnummer: WO 2021/078509

(56) Entgegenhaltungen:
- EP-A1- 2 546 917
- EP-B1- 2 546 917
- DE-A1-102018 008 900
- US-A- 4 189 528

## Beschreibung

Die Erfindung betrifft einen elektrischen Energiespeicher mit wenigstens einem Elektrodenstapel, welcher eine Mehrzahl von in einer Stapelrichtung übereinander angeordneten Lagen von Elektroden und zwischen den Elektroden angeordneten Separatoren umfasst. Eine erste Druckplatte und eine zweite Druckplatte sind zum Ausüben eines Drucks auf den zwischen den Druckplatten angeordneten wenigstens einen Elektrodenstapel vorgesehen. Ein Aktuator dient dem Bewegen zumindest einer der Druckplatten und eine Steuerungseinrichtung dem Ansteuern des wenigstens einen Aktuators. Des Weiteren betrifft die Erfindung ein Verfahren zum Betreiben eines solchen elektrischen Energiespeichers.

Die EP 2 546 917 A1 beschreibt eine Vorrichtung zur Bearbeitung einer Sekundärbatterie mit nicht wässrigem Elektrolyten. Die Vorrichtung umfasst einen Rahmen, Befestigungselemente und einen Pressabschnitt, wobei zum Bewegen des Pressabschnitt relativ zu dem Rahmen ein Schraubenmechanismus verwendet werden kann, um eine äußere Kraft auf den Pressabschnitt auszuüben.

Die US 4 189 528 A beschreibt ein Leistungsmodul, bei welchem zwischen einer ersten Wand und einer zweiten Wand Kathoden-Anoden-Einheiten angeordnet sind. Durch Einbringen eines Fluids in einen Druckbeutel des Leistungsmoduls kann die zweite Wand auf die erste Wand zu bewegt werden.

Elektrische Energiespeicher wie etwa Hochvoltbatterien für Fahrzeuganwendungen, beispielsweise für Hybridfahrzeuge, Plug in-Hybridfahrzeuge oder Elektrofahrzeuge, oder Hochvoltbatterien für stationäre Anwendungen wie etwa Stromversorger oder Speicher weisen eine Vielzahl von in Reihe und/oder parallel geschalteten Einzelzellen auf. Innerhalb der Hochvoltbatterie sind die Einzelzellen in der Regel in so genannten Zellblöcken zusammengefasst. Die Einzelzellen können als so genannte Hardcase-Zellen mit einem metallischen, festen Zellgehäuse oder als so genannte Pouchzellen ausgeführt sein, welche eine Umhüllung in Form einer Verbundfolie aufweisen.

Die Zellblöcke enthalten jeweils eine bestimmte Anzahl der Einzelzellen inklusive von Einrichtungen zu derer mechanischen Fixierung, zur elektrischen Kontaktierung der Einzelzellen und gegebenenfalls zur Temperierung, also zur Kühlung und Heizung. Der Zellblock oder eine Mehrzahl von Zellblöcken sind wiederum in einem geschlossenen Batteriegehäuse untergebracht, welches insbesondere zusätzlich Einrichtungen zur elektrischen Steuerung und Absicherung der Batterie aufweist, etwa ein Batteriemanagementsystem (BMS), Schütze zur Zuschaltung und Abschaltung des Stroms, Sicherungen, Strommesser und dergleichen. Des Weiteren enthält die Batterie vorzugsweise Anschlüsse nach außen, nämlich für die Stromzuleitung und Stromableitung, eine Kühlmittelzuführung und Kühlmittelabführung, einen Anschluss für die Batteriesteuerung und dergleichen.

Die mechanische Fixierung der aufeinander gestapelten Einzelzellen zur Bildung eines Zellblocks erfolgt im Allgemeinen durch Verpressung und/oder Verklebung. Hierbei werden die axialen Verpresskräfte über an den Stirnseiten des Zellblocks angeordnete Druckplatten aufgebracht. Die Druckplatten sind wiederum über an dem Zellblock seitlich vorbeilaufende, durchgehende Spannmittel miteinander verbunden. Die Spannmittel können Verbindungsleisten, Zuganker, Gewindestangen, Spannbänder oder dergleichen umfassen.

Der elektrochemisch aktive Teil der Einzelzelle ist ein so genannter Elektrodenstapel oder Elektrodenflachwickel. Der Elektrodenstapel wird durch Lagen aus Kathoden und Anoden sowie jeweiligen Ableitern gebildet, wobei die jeweilige Kathodenlage von der jeweiligen Anodenlage durch eine Lage in Form eines Separators getrennt ist. Der Elektrodenstapel wird zur Sicherstellung der Funktion im Betrieb senkrecht zu den Lagen mit einer bestimmten Vorspannkraft verpresst.

Vor allem bei einer als Festkörperzelle ausgebildeten Batteriezelle beziehungsweise bei einer eine Mehrzahl von Festkörperzellen umfassenden Batterie ist ein Betriebsdruck von mehreren bar für eine optimale Funktionsfähigkeit der Grenzschichten erforderlich, an welchen die Anode und der Separator beziehungsweise die Kathode und der Separator aneinander angrenzen. Wird in der Batteriezelle eine Lithiummetall enthaltende Anode verwendet, so ist ebenfalls ein Druck von mehreren bar erforderlich, um das so genannte Plating-Verhalten beziehungsweise Stripping-Verhalten der Batteriezelle zu optimieren. Beim Plating wird metallisches Lithium gebildet, anstatt dass sich Lithium-Ionen wie gewünscht in die Elektrode einlagern. Beim Stripping kommt es zu einer Auflösung der Lithium-Anode.

Das sich im Inneren der jeweiligen Einzelzelle befindende elektrochemisch aktive Elektrodenmaterial, welches einerseits die Kathode und andererseits die Anode bildet, ändert seine Dicke abhängig vom Ladungszustand (SOC = State of Charge) und der Lebensdauer (SOH = State of Health). Ein typischer Wert für das Dickenwachstum beim Aufladen einer als Festkörperzelle ausgebildeten Einzelzelle mit einer Lithiummetall-Anode beträgt beispielsweise 15 Prozent, wenn die Einzelzelle ausgehend von einem ungeladenen Zustand vollständig aufgeladen wird (der SOC ändert sich dementsprechend von 0 Prozent auf 100 Prozent). Ein typischer Wert für das Dickenwachstum der Einzelzelle beim Altern derselben liegt sowohl bei einer Festkörperzelle als auch bei einer konventionellen Einzelzelle mit Li-lonen-Zellchemie, bei welcher der Elektrolyt in flüssiger Form vorliegt, bei beispielsweise 5 Prozent. Dies gilt für das Dickenwachstum über die gesamte Lebensdauer, also eine Abnahme des SOH von 100 Prozent auf 0 Prozent. In Anbetracht dieser Zahlenwerte ist also insgesamt eine Dickenänderung von bis zu etwa 20 Prozent zu kompensieren.

Um dies zu erreichen, können elastische Federelemente wie etwa Schaummatten oder Schraubenfedern in den Einzelzellen oder zwischen den Einzelzellen angeordnet sein.

Beispielsweise beschreibt die DE 10 2009 035 482 A1 eine Batterie mit einer Vielzahl von Batterieeinzelzellen, welche in Flachbauweise ausgebildet und zwischen zwei Endplatten zu einem Zellenstapel verspannt sind. Hierbei können als passive Mittel zur Druckbeaufschlagung des Zellenstapels Federmittel vorgesehen sein. Des Weiteren schlägt die DE 10 2009 035 482 A1 vor, zwischen einer Endplatte und einer weiteren, an einem Batteriegehäuse anliegenden Endplatte der Batterie einen ansteuerbaren, beispielsweise elektromechanischen Aktuator anzuordnen. Dieser aktive Aktuator kann anhand von Messwerten der Temperatur und des Drucks in dem Zellenstapel angesteuert werden.

Bei der Batterie gemäß der DE 10 2009 035 482 A1 ist die Endplatte mittels des elektromechanischen Aktuators relativ zu der weiteren Endplatte bewegbar, welche an dem Batteriegehäuse anliegt. Dementsprechend wird die beim Bewegen des Aktuators aufgebrachte Kraft gegen das Batteriegehäuse abgestützt. Einerseits macht es dies erforderlich, das Batteriegehäuse besonders robust auszulegen. Zudem wird es dadurch erschwert, einen die Endplatten umfassenden Zellblock aus dem Batteriegehäuse zu entfernen beziehungsweise den Zellblock zu demontieren. Dasselbe gilt, wenn bei Einbau einer Batterie in ein Fahrzeug Verpresskräfte gegen Strukturen des Fahrzeugs abgestützt werden. Auch dann ergibt sich im Fahrzeugbetrieb eine nicht mehr beziehungsweise nur mit hohem Aufwand zu demontierende Einheit.

Nachteilig ist des Weiteren beim Anordnen von elastischen Elementen zwischen den Einzelzellen das durch die Federkennlinie prinzipbedingte Ansteigen der Presskraft bei sich ausdehnenden Elektroden beziehungsweise Einzelzellen. Dadurch muss die Zelle oder der Zellblock auf sehr hohe axiale Kräfte ausgelegt werden. Des Weiteren gibt es einen im Betrieb der Batterie nicht nutzbaren Wegbereich zur Vorspannung der Feder auf eine nötige Mindestverpressung.

Darüber hinaus weist ein elastisches Element in Form einer Feder eine große Blocklänge auf. Diese Blocklänge ist die Länge der Feder im komplett zusammengedrückten Zustand. In einem Kraft-Weg-Diagramm, in welchem die axiale Presskraft in Abhängigkeit von der Strecke angegeben ist, um welche die Feder zusammengedrückt ist, steigt mit Erreichen der Blocklänge die entsprechende Kennlinie beziehungsweise Kurve senkrecht an. Auch der Bereich ab dem Erreichen dieser Blocklänge ist somit im Betrieb der Batterie nicht nutzbar.

Aufgabe der vorliegenden Erfindung ist es, einen elektrischen Energiespeicher der eingangs genannten Art zu schaffen, bei welchem eine verbesserte Druckbeaufschlagung des wenigstens einen Elektrodenstapels erreichbar ist, und ein entsprechend verbessertes Verfahren zum Betreiben des elektrischen Energiespeichers zu schaffen.

Diese Aufgabe wird durch einen elektrischen Energiespeicher mit den Merkmalen des Patentanspruchs 1 und durch ein Verfahren mit den Merkmalen des Patentanspruchs 10 gelöst. Vorteilhafte Ausgestaltungen mit zweckmäßigen Weiterbildungen der Erfindung sind in den abhängigen Patentansprüchen angegeben.

Der erfindungsgemäße elektrische Energiespeicher weist wenigstens einen Elektrodenstapel auf, welcher eine Mehrzahl von in einer Stapelrichtung übereinander angeordneten Lagen von Elektroden und zwischen den Elektroden angeordneten Separatoren umfasst. Der elektrische Energiespeicher umfasst eine erste Druckplatte und eine zweite Druckplatte zum Ausüben eines Drucks auf den zwischen den Druckplatten angeordneten wenigstens einen Elektrodenstapel. Des Weiteren weist der elektrische Energiespeicher wenigstens einen Aktuator zum Bewegen zumindest einer der Druckplatten und eine Steuerungseinrichtung zum Ansteuern des wenigstens einen Aktuators auf. Die Druckplatten sind durch den wenigstens einen Aktuator miteinander gekoppelt, und durch ein mittels der Steuerungseinrichtung bewirktes Ansteuern des wenigstens einen Aktuators ist ein Abstand der Druckplatten voneinander veränderbar.

Der wenigstens eine Aktuator ist als mechanische Antriebseinrichtung ausgebildet, mittels welcher der Abstand der Druckplatten voneinander veränderbar ist. Eine derartige Antriebseinrichtung ermöglicht ein besonders exaktes Einstellen des Abstands der Druckplatten voneinander und somit des Drucks, welcher auf den zwischen den Druckplatten angeordneten wenigstens einen Elektrodenstapel ausgeübt wird.

Einfach und aufwandsarm ist es, dass die Antriebseinrichtung eine Gewindespindel und/oder eine Zahnstange aufweist. Bei Vorsehen einer Gewindespindel ist diese vorzugsweise selbsthemmend ausgebildet. Wenn die Antriebseinrichtung die Zahnstange aufweist, so ist diese vorzugsweise mechanisch verriegelbar ausgebildet. Zusätzlich oder alternativ kann die Zahnstange eine Bremseinrichtung aufweisen. Dadurch kann sichergestellt werden, dass im stromlosen Zustand eine aktive Verriegelung der Zahnstange vorhanden ist. In derartigen Fällen braucht nämlich der die Gewindespindel und/oder die Zahnstange antreibende Elektromotor nicht mit Strom versorgt zu werden, um die wenigstens eine mittels des Aktuators bewegbare Druckplatte an einer gewünschten Position zu halten.

Die Gewindespindel und/oder die Zahnstange sind dazu ausgebildet, durch Betätigen einer Hebeleinrichtung den Abstand der Druckplatten voneinander zu verändern. Dies ist für eine im Hinblick auf den Bauraum besonders flexible Anordnung der Gewindespindel beziehungsweise der Zahnstange vorteilhaft.

Dadurch, dass der wenigstens eine Aktuator die beiden Druckplatten miteinander koppelt beziehungsweise verbindet, kann der Abstand der Druckplatten voneinander und somit der auf den wenigstens einen Elektrodenstapel ausgeübte Druck verändert werden, ohne dass hierbei eine Kraft auf ein Gehäuse des elektrischen Energiespeichers oder bei Anordnung des elektrischen Energiespeichers in einem Fahrzeug eine Fahrzeugstruktur übertragen zu werden braucht. Vielmehr ist durch die mittels des wenigstens einen Aktuators miteinander gekoppelten Druckplatten ein System bereitgestellt, welches in sich verspannt werden kann, wobei dies durch das Ansteuern des wenigstens einen Aktuators mittels der Steuerungseinrichtung bewirkt wird.

Es können also die Druckplatten aktiv aufeinander zu beziehungsweise voneinander weg bewegt werden, indem die Steuerungseinrichtung den wenigstens einen Aktuator ansteuert. Da hierbei keine Druckkräfte an umliegenden Elementen abgestützt zu werden brauchen, ist die Druckbeaufschlagung des wenigstens einen Elektrodenstapels verbessert. Es können somit Module beziehungsweise Einheiten, welche durch den elektrischen Energiespeicher gebildet sind, besonders leicht etwa in ein Batteriegehäuse oder in ein Fahrzeug eingebaut werden. Denn Druckkräfte brauchen nicht an Elementen wie dem Batteriegehäuse oder dem Fahrzeug abgestützt zu werden. Dadurch wird beispielsweise eine Wartung oder ein Austausch eines Moduls in Form des elektrischen Energiespeichers erleichtert.

Vorzugsweise ist die Steuerungseinrichtung dazu ausgebildet, in Abhängigkeit von einer jeweiligen Dicke des wenigstens einen Elektrodenstapels mittels des wenigstens einen Aktuators über die Druckplatten ein Beaufschlagen des wenigstens einen Elektrodenstapels mit einer im Wesentlichen konstanten Kraft zu bewirken.

Zur Kompensation von Dickenänderungen des wenigstens einen Elektrodenstapels kommt somit vorzugsweise ein aktiv gesteuertes Konstantkraftsystem zum Einsatz, welches sich insbesondere durch eine im Wesentlichen horizontale Kraft-Weg-Kennlinie auszeichnet. Letzteres bedeutet, dass in dem nutzbaren Teilbereich des Wegs oder der Strecke, in welchem wenigstens eine der Druckplatten relativ zu der anderen Druckplatte bewegbar ist, die von den Druckplatten auf den wenigstens einen Elektrodenstapel ausgeübte Kraft unabhängig von der Position der bewegbaren Druckplatte entlang des Wegs ist. Entlang des Wegs oder der Strecke kann die bewegbare Druckplatte mittels des wenigstens einen Aktuators parallel zu der Stapelrichtung vorbewegt oder zurückbewegt werden. Dementsprechend können entlang des Wegs oder der Strecke die Druckplatten parallel zu der Stapelrichtung aufeinander zu bewegt oder voneinander weg bewegt werden.

Ändert sich die Dicke des wenigstens einen Elektrodenstapels, etwa aufgrund eines Ladens oder bei einer Entladung oder auch in Folge einer Alterung, so werden zwar die flächig an dem wenigstens einen Elektrodenstapel anliegenden Druckplatten entsprechend der Dickenänderung aktiv, also mittels des wenigstens einen Aktuators aufeinander zu oder voneinander weg bewegt. Jedoch ergibt sich eine konstante axiale Verpressung entlang der Stapelrichtung. Die Kraft, mit welcher die Druckplatten den wenigstens einen Elektrodenstapel beaufschlagen und somit auch der auf den wenigstens einen Elektrodenstapel wirkende Druck bleibt so zumindest im Wesentlichen konstant. Auch dies ist einer verbesserten Druckbeaufschlagung des Elektrodenstapels zuträglich.

Darüber hinaus geht auch im Gegensatz zu den Gegebenheiten bei einer Verwendung konventioneller Federelemente, welche einen Elektrodenstapel mit Druck beaufschlagen können, kein Weg aufgrund einer Vorspannung einer Feder oder des Federelements verloren, welcher zum Erreichen einer erforderlichen Mindestverpressung vorzusehen ist. Vielmehr wird aufgrund der vorzugsweise horizontalen Kraft-Weg-Kennlinie des Konstantkraftsystems vorzugsweise immer nur die nötige Mindestvorspannkraft angelegt. Infolgedessen kann eine den wenigstens einen Elektrodenstapel aufweisende Batteriezelle und/oder ein eine Mehrzahl von Batteriezellen aufweisender Zellblock besonders leicht sowie kostengünstig und auch im Hinblick auf den beanspruchten Bauraum besonders kompakt ausgeführt werden.

Da der wenigstens eine Elektrodenstapel somit stets mit der optimalen Kraft verpresst wird, kommt es zudem zu keiner negativen Beeinflussung der Performance der Batteriezelle beziehungsweise der Batteriezellen und der Lebensdauer der Batteriezelle beziehungsweise der Batteriezellen.

Der wenigstens eine Aktuator kann die Druckplatten miteinander koppeln, indem der wenigstens eine Aktuator um eine Anordnung umläuft, welche die Druckplatten und den zwischen den Druckplatten angeordneten wenigstens einen Elektrodenstapel umfasst. Der wenigstens eine Aktuator kann also diese Anordnung und somit auch die Druckplatten umschließen beziehungsweise um eine die Druckplatten und den wenigstens einen Elektrodenstapel umfassende Baueinheit gewickelt sein.

Eine besonders kompakte Bauform des elektrischen Energiespeichers lässt sich jedoch erreichen, wenn der Aktuator oder zumindest eine Komponente des Aktuators zwischen den Druckplatten angeordnet ist.

Als weiter vorteilhaft hat es sich gezeigt, wenn der wenigstens eine Aktuator eine Bewegungseinrichtung aufweist oder als Bewegungseinrichtung ausgebildet ist, welche mit der ersten Druckplatte einerseits und mit der zweiten Druckplatte andererseits verbunden ist. Dadurch lässt sich eine sehr direkte Kraftübertragung auf die Druckplatten zum Zwecke des Veränderns des Abstands der Druckplatten voneinander erreichen.

Der wenigstens eine Aktuator kann als Fluidsteller mit wenigstens einer Kammer ausgebildet sein, welche zum Aufnehmen und Abgeben eines Fluids in Abhängigkeit von dem einzustellenden Abstand der Druckplatten voneinander ausgebildet ist. Eine solche Ausgestaltung des wenigstens einen Aktuators lässt sich im Hinblick auf die Ansteuerung durch die Steuerungseinrichtung besonders einfach realisieren.

Ein derartiger Fluidsteller kann auch als Fluidmuskel bezeichnet werden, bei welchem es von einer Menge des in der Kammer enthaltenen Fluids abhängt, ob sich der Muskel zusammenzieht oder seine Länge vergrößert. Als Fluid kann neben einer Flüssigkeit insbesondere ein Gas zum Einsatz kommen, beispielsweise Luft. Ein solcher, pneumatischer Muskel dehnt sich in Querrichtung aus, wenn die Kammer mit Gas beaufschlagt wird. Infolgedessen zieht sich der pneumatische Muskel in die Längsrichtung zusammen. Dies bewirkt dann, dass sich die Druckplatten aufeinander zu bewegen.

Die Verwendung von Luft als dem Fluid hat den Vorteil, dass Luft aus der Umgebung angesaugt beziehungsweise in die Umgebung abgelassen beziehungsweise abgeblasen werden kann. Wenn ein anderes Gas als Luft zum Einbringen und Ablassen aus der wenigstens einen Kammer des Fluidstellers verwendet wird, ist vorzugsweise ein Gastank vorgesehen. In diesem Gastank kann das Gas gespeichert werden, welches nicht in der Kammer des pneumatischen Muskels benötigt wird.

Dies gilt insbesondere, wenn der wenigstens eine Aktuator als elektromechanische Antriebseinrichtung ausgebildet ist. Dementsprechend wird die Bewegungsenergie für die Antriebseinrichtung vorzugsweise durch einen Elektromotor bereitgestellt. Auch dies ist einer einfach zu realisierenden Ansteuerung des wenigstens einen Aktuators zuträglich.

Insbesondere bei der Ausbildung des wenigstens einen Aktuators als mechanische, insbesondere elektromechanische, Antriebseinrichtung ist es vorteilhaft, wenn zwischen dem wenigstens einen Elektrodenstapel und zumindest einer der Druckplatten ein elastisches Element angeordnet ist. Denn dann wird ein ständiges Nachstellen des steifen Systems verhindert. Als derartiges elastisches Element kann beispielsweise eine Spannmatte zwischen dem wenigstens eine Elektrodenstapel und der Druckplatte angeordnet sein.

Als weiter vorteilhaft hat es sich gezeigt, wenn die Steuerungseinrichtung dazu ausgebildet ist, in Abhängigkeit von einem Betriebszustand des wenigstens einen Elektrodenstapels den über die Druckplatten auf den wenigstens einen Elektrodenstapel ausgeübten Druck zu verringern. Mit anderen Worten ermöglicht es die aktive Regelung der auf den wenigstens einen Elektrodenstapel aufgebrachten Kraft, die Kraft in Abhängigkeit von dem Betriebszustand des wenigstens einen Elektrodenstapels gezielt zu variieren.

Beispielsweise kann bei einem Transport des elektrischen Energiespeichers oder im ruhenden Betrieb, also dann, wenn der elektrische Energiespeicher über längere Zeit weder geladen noch entladen wird, die Verpresskraft auf null zurückgefahren werden. Des Weiteren kann ein solches Zurückfahren der Verpresskraft auf null im Gefahrfall vorgesehen sein, etwa wenn ein mit dem elektrischen Energiespeicher ausgestattetes Kraftfahrzeug einen Unfall hat und/oder wenn es zu einem Kurzschluss und/oder zu einer Überladung des elektrischen Energiespeichers kommt. Jedoch auch in anderen Gefahrenfällen kann es sinnvoll sein, den über die Druckplatten auf den wenigstens einen Elektrodenstapel ausgeübten Druck zu verringern.

Der elektrische Energiespeicher kann als Batteriezelle mit einem Zellgehäuse ausgebildet sein, wobei die Druckplatten und der wenigsten eine Elektrodenstapel innerhalb des Zellgehäuses angeordnet sind. Bei einer derartigen Ausgestaltung braucht nicht das Zellgehäuse auf die von den Druckplatten ausgeübte Verpresskraft beziehungsweise auf den von den Druckplatten ausgeübten Druck ausgelegt zu sein. Vielmehr ist ein die Druckplatten und den wenigstens einen Elektrodenstapel umfassendes Paket in sich verspannt. Dies macht die Auslegung des Zellgehäuses besonders einfach und aufwandsarm.

Zusätzlich oder alternativ kann der elektrische Energiespeicher eine Mehrzahl von zwischen den Druckplatten angeordneten Batteriezellen aufweisen. Hierbei weist die jeweilige Batteriezelle ein jeweiliges Zellgehäuse mit in dem jeweiligen Zellgehäuse angeordnetem Elektrodenstapel auf. Es können also auch eine Vielzahl von Batteriezellen zwischen den Druckplatten angeordnet und die Elektrodenstapel der jeweiligen Batteriezellen über die Druckplatten mit der Verpresskraft beziehungsweise dem Druck beaufschlagt werden. In einem derartigen Fall braucht ein die Batteriezellen und die Druckplatten aufnehmendes Batteriegehäuse nicht zum Aufnehmen der Verpresskraft ausgelegt zu werden. Dies macht die Auslegung des Batteriegehäuses besonders einfach und aufwandsarm.

Bei dem erfindungsgemäßen Verfahren zum Betreiben eines elektrischen Energiespeichers mit wenigstens einem Elektrodenstapel, welcher eine Mehrzahl von in einer Stapelrichtung übereinander angeordneten Lagen von Elektroden und zwischen den Elektroden angeordneten Separatoren umfasst, üben eine erste Druckplatte und eine zweite Druckplatte einen Druck auf den zwischen den Druckplatten angeordneten wenigstens einen Elektrodenstapel aus. Eine Steuerungseinrichtung steuert einen Aktuator an, und der wenigstens eine Aktuator bewegt zumindest eine der Druckplatten. Hierbei sind die Druckplatten durch den wenigstens einen Aktuator miteinander gekoppelt. Durch ein mittels der Steuerungseinrichtung bewirktes Ansteuern des wenigstens einen Aktuators wird ein Abstand der Druckplatten voneinander verändert. Es kann also der auf den wenigstens einen Elektrodenstapel ausgeübte Druck eingestellt, insbesondere geregelt beziehungsweise nachgeregelt werden. Der wenigstens eine Aktuator ist als mechanische Antriebseinrichtung ausgebildet ist, mittels welcher der Abstand der Druckplatten voneinander verändert wird. Die Antriebseinrichtung weist eine Gewindespindel und/oder eine Zahnstange auf, wobei die Gewindespindel und/oder die Zahnstange durch Betätigen einer Hebeleinrichtung den Abstand der Druckplatten voneinander verändert. Folglich ist ein Verfahren geschaffen, mittels welchem eine verbesserte Druckbeaufschlagung des wenigstens einen Elektrodenstapels erreichbar ist.

Dies gilt insbesondere, wenn der von den Druckplatten auf den wenigstens einen Elektrodenstapel ausgeübte Druck durch Ansteuern des wenigstens einen Aktuators zumindest im Wesentlichen konstant gehalten wird.

Die für den erfindungsgemäßen elektrischen Energiespeicher beschriebenen Vorteile und bevorzugten Ausführungsformen gelten auch für das erfindungsgemäße Verfahren und umgekehrt.

Weitere Vorteile, Merkmale und Einzelheiten der Erfindung ergeben sich aus der nachfolgenden Beschreibung bevorzugter Ausführungsbeispiele sowie anhand der Zeichnungen. Die vorstehend in der Beschreibung genannten Merkmale und Merkmalskombinationen sowie die nachfolgend in der Figurenbeschreibung genannten und/oder in den Figuren alleine gezeigten Merkmale und Merkmalskombinationen sind nicht nur in der jeweils angegebenen Kombination, sondern auch in anderen Kombinationen oder in Alleinstellung verwendbar.

Dabei zeigen:
- Fig. 1: einen Graphen, in welchem anhand von Kurven Kraft-Weg-Kennlinien bei einem Konstantkraftsystem eines elektrischen Energiespeichers und bei einem elastische Elemente aufweisenden elektrischen Energiespeicher dargestellt sind;
- Fig. 2: in einer schematischen Perspektivansicht eine Batterie mit einer Mehrzahl von Batteriezellen, welche zwischen zwei Druckplatten eingespannt sind, wobei ein Abstand der Druckplatten voneinander durch das Ansteuern pneumatischer Muskeln verändert werden kann, welche mit den Druckplatten verbunden sind;
- Fig. 3: eine Seitenansicht auf eine Breitseite der Batterie, welche die in Fig. 2 gezeigten Druckplatten und das zwischen den Druckplatten angeordnete Paket an Batteriezellen aufweist;
- Fig. 4: eine Seitenansicht auf eine Stirnseite der Batterie gemäß Fig. 2;
- Fig. 5: eine Variante der Batterie mit einem Konstantkraftsystem, bei welchem durch Ansteuern von Gewindespindeln der Abstand zwischen den Druckplatten veränderbar ist; und
- Fig. 6: eine erfindungsgemäße Variante der Batterie, bei welcher mittels eines Hebelsystems der Abstand der Druckplatten voneinander verändert werden kann.

In den Fig. sind gleiche oder funktionsgleiche Elemente mit gleichen Bezugszeichen versehen.

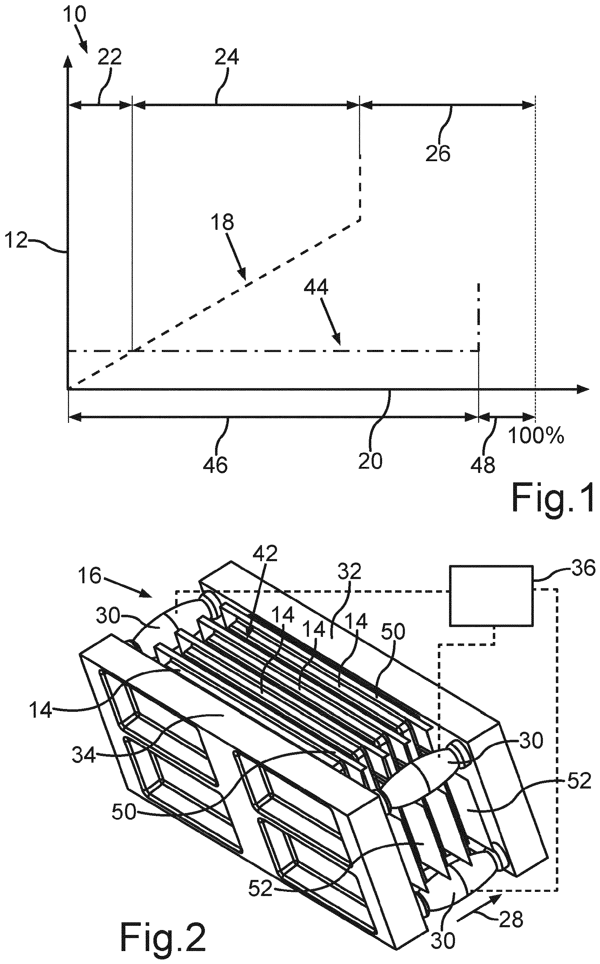

In einem in Fig. 1 gezeigten Graphen 10 ist auf einer Ordinate 12 eine axiale Presskraft aufgetragen, welche in einer einzelnen Batteriezelle 14 auf einen Elektrodenstapel der Batteriezelle 14 oder in einer Batterie 16 (vergleiche Fig. 2) mit einer Mehrzahl von Batteriezellen 14 auf die Elektrodenstapel der aufeinander gestapelten Batteriezellen 14 aufgebracht werden kann. Das Zusammenpressen der Lagen von Elektroden in Form von Kathoden und Anoden sowie von zwischen den Lagen der Kathode und der Anode angeordneten jeweiligen Lagen eines Separators des Elektrodenstapels dient der Sicherstellung der Funktion des Elektrodenstapels im Betrieb der Batteriezelle 14 beziehungsweise der Batterie 16.

Eine in dem Graphen 10 in Fig. 1 dargestellte erste Kennlinie 18 veranschaulicht das Verhalten eines elastischen Elements wie etwa einer Feder, welche in einem Zellgehäuse der Batteriezelle 14 oder einem (nicht gezeigten) Batteriegehäuse der Batterie 16 (vergleiche Fig. 2) angeordnet sein kann, um den oder die Elektrodenstapel mit einem Druck zu beaufschlagen. In dem Graphen 10 in Fig. 1 ist hierbei auf einer Abszisse 20 der Weg aufgetragen, um welchen die Feder zusammengedrückt werden kann. Ein erster Abschnitt 22 der Kennlinie 18 stellt dementsprechend einen Bereich des Wegs dar, um welchen die Feder zum Aufbringen einer erforderlichen Vorspannkraft zusammengedrückt werden muss. Diese Vorspannkraft wird bei der Montage der Batteriezelle 14 beziehungsweise der Batterie 16 oder eines derartigen Zellblocks eingestellt. In diesem Bereich des Wegs ist die von der Feder aufbringbare Kraft nicht nutzbar. Ein weiterer Abschnitt 24 der Kennlinie 18 stellt demgegenüber einen nutzbaren Bereich des Wegs dar. In diesem Abschnitt 24 bringt das elastische Element in Form der Feder eine zunehmend größere axiale Presskraft auf den wenigstens einen Elektrodenstapel auf. Die Kraft steigt in diesem Abschnitt 24 (linear) an, je weiter die Feder zusammengedrückt wird.

Ist die Feder vollständig zusammengedrückt, so steigt die Kennlinie 18 senkrecht an. Ein entsprechender Abschnitt 26 des in der Batteriezelle 14 oder in der Batterie 16 zur Verfügung stehenden Wegs stellt eine Blocklänge der Feder dar. Ist die Feder vollständig zusammengedrückt, so können sich die Elektroden des Elektrodenstapels nicht weiter senkrecht zu ihrer Stapelrichtung 28 ausdehnen, welche in Fig. 2 durch einen Pfeil veranschaulicht ist.

Nachteilig ist also bei der Verwendung einer Feder beziehungsweise eines derartigen elastischen Elements, dessen Verhalten durch die Kennlinie 18 in dem Graphen 10 beschrieben ist, das durch die Federkennlinie prinzipbedingte Ansteigen der Presskraft bei sich ausdehnenden Elektroden des wenigstens einen Elektrodenstapels.

Dementsprechend müssen die Batteriezelle 14 beziehungsweise die Batterie 16 oder der Zellblock auf sehr hohe axiale Kräfte ausgelegt werden.

Dies wird vorliegend vermieden, indem der nachstehend detailliert beschriebene elektrische Energiespeicher in Form einer einzelnen Batteriezelle 14 oder der Batterie 16 (vergleiche Fig. 2) ein Konstantkraftsystem aufweist, welches gemäß Fig. 2 beispielsweise als pneumatische Muskeln 30 ausgebildete Aktuatoren, eine erste Druckplatte 32, eine zweite Druckplatte 34 und eine Steuerungseinrichtung 36 zum Ansteuern der Aktuatoren umfasst.

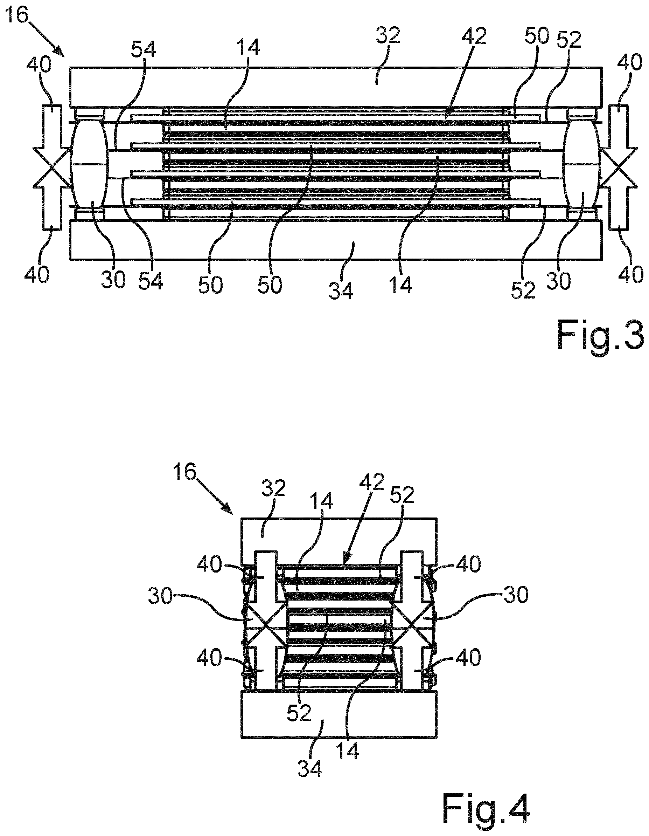

Die Aktuatoren in Form etwa der pneumatischen Muskeln 30 können die Druckplatten 32, 34 aufeinander zu oder voneinander weg bewegen. Das Bewegen der Druckplatten 32, 34 aufeinander zu ist in Fig. 3 bis Fig. 6 durch jeweilige Pfeile 40 veranschaulicht und bewirkt das Ausüben eines Drucks auf den jeweiligen Elektrodenstapel der Batteriezellen 14. Mit anderen Worten bewirkt das Bewegen der Druckplatten 32, 34 aufeinander zu ein Zusammendrücken eines Pakets 42 der Batteriezellen 14 und somit der Elektrodenstapel der Batteriezellen 14 in diesem Paket 42. Das Paket 42 ist vorliegend zwischen den Druckplatten 32, 34 angeordnet. Durch die Steuerungseinrichtung 36 wird hierbei sichergestellt, dass mittels der Aktuatoren über die Druckplatten 32, 34 eine konstante Kraft auf das Paket 42 ausgeübt wird. Somit wirkt auf die Elektrodenstapel der Batteriezellen 14 des Pakets 42 ein konstanter Druck.

Eine dieses Konstantkraftsystem veranschaulichende Kennlinie 44 ist ebenfalls in dem Graphen 10 in Fig. 1 dargestellt. Ein erster, vorliegend horizontaler Abschnitt 46 der Kennlinie 44 stellt den nutzbaren Bereich des Wegs dar, entlang dessen die Druckplatten 32, 34 aufeinander zu oder voneinander weg bewegt werden können. Aus dem horizontalen Verlauf der Kennlinie 44 in dem Abschnitt 46 ist ersichtlich, dass die Druckplatten 32, 34 in dem Konstantkraftsystem das Paket 42 wegunabhängig mit der konstanten Kraft beaufschlagen. Dies gilt bei dem Beaufschlagen der die jeweiligen Elektrodenstapel aufweisenden Batteriezellen 14, welche in dem Paket 42 der Batterie 16 angeordnet sind (vergleiche Fig. 2), mit der Kraft und in analoger Weise auch bei der Beaufschlagung des in einem Zellgehäuse einer einzelnen Batteriezelle 14 angeordneten Elektrodenstapels, wenn dieser zwischen den Druckplatten 32, 34 angeordnet ist.

Lediglich in einem sehr kurzen Endabschnitt 48 des Wegs, welcher dem in der Batteriezelle 14 oder der Batterie 16 zur Verfügung stehenden Bewegungsspielraum für zumindest eine der Druckplatten 32, 34 entspricht, können die Druckplatten 32, 34 nicht weiter auf einander zu bewegt werden. Dies kann etwa der Fall sein, weil die Druckplatten 32, 34 das Paket 42 maximal möglich zusammengepresst haben oder weil die als Bewegungseinrichtungen ausgebildeten pneumatischen Muskeln 30 ein weiteres Bewegen der Druckplatten 32, 34 aufeinander zu nicht zulassen.

Dementsprechend steigt dann, wenn das Konstantkraftsystem auf Block geht, die Kennlinie 44 senkrecht an. Jedoch ist die Blocklänge beziehungsweise der nicht nutzbare Weg deutlich kürzer als bei dem durch die Kennlinie 18 veranschaulichten System, bei welchem die Feder zum Einsatz kommt. Dies ist anschaulich in dem Graphen 10 aus der kürzeren Länge des Endabschnitts 48 im Vergleich zu dem Abschnitt 26 ersichtlich. Des Weiteren ist aus Fig. 1 ersichtlich, dass auch der bei Verwendung der Feder nicht nutzbare Bereich des Wegs, welcher der Länge des Abschnitts 22 entspricht, bei Verwendung des Konstantkraftsystems nutzbar ist.

Die Verwendung des Konstantkraftsystems sorgt also dafür, dass bei einer Änderung der Dicke der Elektrodenstapel in den Batteriezellen 14 beziehungsweise bei einer Änderung der Dicke des Elektrodenstapel einer einzelnen Batteriezelle 14 zumindest eine der flächig an dem Elektrodenstapel beziehungsweise dem Paket 42 anliegenden Druckplatten 32, 34 entsprechend der Dickenänderung aktiv nach vorne, also etwa entgegen der Stapelrichtung 28, oder zurück, also in die Stapelrichtung 28, bewegt wird. Dementsprechend ergibt sich eine konstante axiale Verpressung des wenigstens einen Elektrodenstapels der Batterie 16.

Die Änderung der Dicke des Elektrodenstapels in der jeweiligen Batteriezelle 14 beziehungsweise des Pakets 42 der Batteriezellen 14 in der Batterie 16 kann durch ein Aufladen der Batteriezelle 14 beziehungsweise der Batteriezellen 14 oder eine Entladung derselben bedingt sein. Des Weiteren nimmt in Folge einer Alterung der Batteriezellen 14 die Dicke der Elektrodenstapel der Batteriezellen 14 in die Stapelrichtung 28 zu. Alle diese Dickenänderungen können jedoch durch das aktiv gesteuerte Konstantkraftsystem mit der vorzugsweise horizontalen Kraft-Weg-Kennlinie, also der Kennlinie 44, kompensiert werden.

Die Verwendung des Konstantkraftsystems ist insbesondere dann vorteilhaft, wenn die Batteriezellen 14 als Festkörperzellen ausgebildet sind, welche im Hinblick auf die Zellchemie als Lithium-lonen-Zellen ausgebildet sind. Dementsprechend kann die positive Elektrode der jeweiligen Batteriezelle 14 durch Lithium-Verbindungen bereitgestellt sein.

Gemäß Fig. 2 und Fig. 3 können die Batteriezellen 14 als so genannte Pouchzellen ausgebildet sein, bei welchen der jeweilige Elektrodenstapel in einer flexiblen, aus einem Folienmaterial gebildeten Hülle angeordnet ist. Diese flexible Hülle ist von einem jeweiligen Zellrahmen 50 der Batteriezelle 14 eingefasst. Des Weiteren weist die jeweilige Batteriezelle 14 Ableiterfahnen 52, 54 (vergleiche Fig. 3), durch welche elektrische Anschlüsse der jeweiligen Batteriezelle 14 bereitgestellt sind.

Je nachdem, wie diese Ableiterfahnen 52, 54 in Form eines jeweiligen Minuspols und eines jeweiligen Pluspols der Batteriezellen 14 miteinander verschaltet sind, lässt sich von der Batterie 16 eine gewünschte Nennspannung und/oder eine gewünschte Stromstärke bereitstellen, welche vorzugsweise größer ist als die von einer einzelnen der Batteriezellen 14 bereitstellbare Nennspannung beziehungsweise Stromstärke. Insbesondere kann die Batterie 16 als Hochvoltbatterie oder als Batteriemodul beziehungsweise Zellblock einer Hochvoltbatterie für ein Kraftfahrzeug ausgebildet sein. Eine derartige Hochvoltbatterie kann eine Nennspannung von mehr als 60 Volt, insbesondere von mehreren 100 Volt bereitstellen. In Fig. 4 ist die Batterie 16 in einer Ansicht auf ihre Schmalseite gezeigt.

Gemäß Fig. 2 bis Fig. 4 können die Aktuatoren in Form der pneumatischen Muskeln 30 in jeweiligen Eckbereichen der Druckplatten 32, 34 angeordnet sein. So lässt sich besonders einfach erreichen, dass durch ein aktives Bewegen etwa der Druckplatte 32 nach vorne, also entgegen der Stapelrichtung 28, oder zurück, also in die Stapelrichtung 28, Änderungen der Dicke des wenigstens einen Elektrodenstapels beziehungsweise des Pakets 42 kompensiert werden können. Auf diese Weise ergibt sich eine konstante axiale Verpressung des Pakets 42 zwischen den Druckplatten 32, 34. Die Dicke des Elektrodenstapels beziehungsweise des Pakets 42 oder Zellstapels kann sich wie bereits erwähnt aufgrund einer Aufladung, einer Entladung oder einer Alterung des Elektrodenstapels beziehungsweise der Batteriezellen 14 ändern.

Gemäß Fig. 2 bis Fig. 4 sind die Aktuatoren in Form der pneumatischen Muskeln 30 mit der ersten Druckplatte 32 einerseits und mit der zweiten Druckplatte 34 andererseits verbunden. Hierbei sind die pneumatischen Muskeln 30 zwischen den Druckplatten 32, 34 angeordnet. Dehnen sich die pneumatischen Muskeln 30 in Querrichtung, also vorliegend senkrecht zu der Stapelrichtung 28 aus, so ziehen sich die pneumatischen Muskeln 30 in ihre Längsrichtung zusammen. Dies bewirkt, dass sich die Druckplatten 32, 34 aufeinander zu bewegen. Vorteilhaft ist, dass auf diese Weise ein in sich verspanntes System bereitgestellt ist. Dadurch wird keine Kraft auf ein umliegendes (vorliegend nicht gezeigtes) Batteriegehäuse der Batterie 16 oder bei Anordnung der Batterie 16 in einem Fahrzeug auf Fahrzeugstrukturen übertragen.

Das Kontrahieren der pneumatischen Muskeln 30 oder derartiger Fluidsteller aufgrund einer durch die Steuerungseinrichtung 36 bewirkten pneumatischen Ansteuerung führt zu einem Bewegen der Druckplatten 32, 34 aufeinander zu entsprechend den in Fig. 3 und Fig. 4 dargestellten Pfeilen 40. Als Fluid, mit welchem entsprechende, nach Art eines Schlauchs ausgebildete Kammern der pneumatischen Muskeln 30 beaufschlagt werden können, kann insbesondere ein Gas, beispielsweise Luft sein. Dies hat den Vorteil, dass Luft aus der Umgebung angesaugt und in die Umgebung abgelassen werden kann.

Alternativ zu den vorliegend in den vier Eckbereichen der Druckplatten 32, 34 angeordneten pneumatischen Muskeln können auch beispielsweise auf einander gegenüberliegenden Seiten des Pakets 42 jeweilige pneumatische Muskeln 30 angeordnet sein. Diese beiden pneumatischen Muskeln 30 erstrecken sich dann entlang jeweiliger Schmalseiten des Pakets 42. Des Weiteren ist es möglich, Aktuatoren vorzusehen, welche von der Steuerungseinrichtung 36 angesteuert werden können und welche die Druckplatten 32, 34 umschließen beziehungsweise um einen die Druckplatten 32, 34 umfassenden Stapel herumgeschlungen sind.

Das Paket 42, welches zwischen den beiden Druckplatten 32, 34 angeordnet ist, kann jedoch auch durch andere Aktuatoren als die vorliegend beispielhaft gezeigten pneumatischen Muskeln 30 zusammengezogen werden. Beispielsweise können elektromechanische Aktuatoren zum Einsatz kommen.

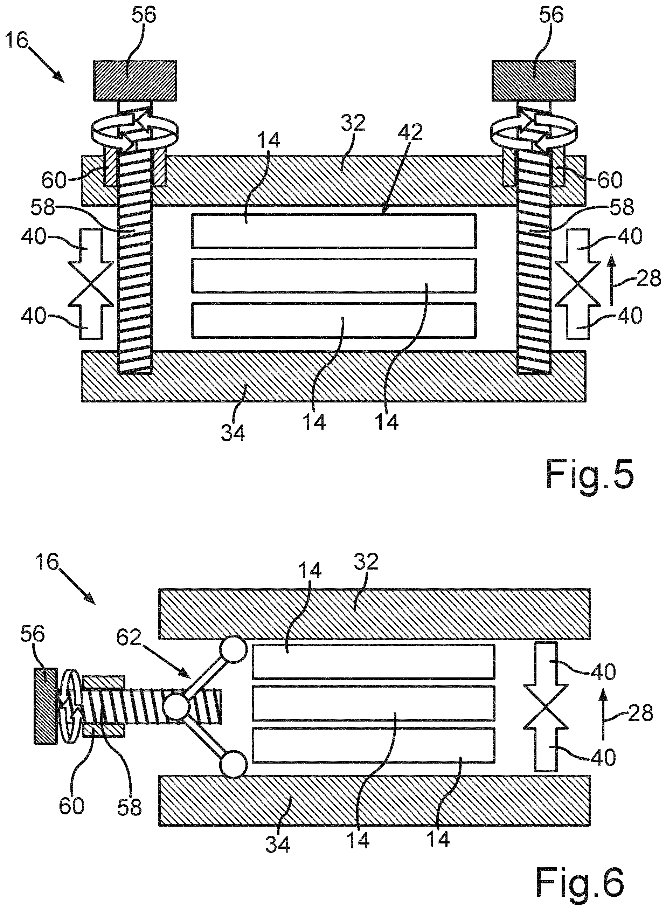

Es ist also denkbar, das Konstantkraftsystem, bei welchem die außen flächig an dem wenigstens einen Elektrodenstapel beziehungsweise dem Paket 42 oder Stapel der Batteriezellen 14 anliegenden Druckplatten 32, 34 aktiv aufeinander zu beziehungsweise voneinander weg bewegt werden, mechanisch, insbesondere elektromechanisch auszuführen. Die Bewegungsenergie zum Bewegen wenigstens einer der Druckplatten 32, 34 kann hierbei insbesondere von einem Elektromotor 56 bereitgestellt werden (vergleiche Fig. 5 und Fig. 6). In Fig. 5 und Fig. 6 ist die zum Ansteuern der Elektromotoren 56 ausgebildete Steuerungseinrichtung 36 der Einfachheit halber nicht gezeigt.

In Fig. 5 ist schematisch dargestellt, wie jeweilige, senkrecht zu der Stapelrichtung einander 28 gegenüberliegend angeordnete Bewegungseinrichtungen in Form von Gewindespindeln 58 durch einen jeweiligen Elektromotor 56 angetrieben werden können. Jeweilige Spindelmuttern 60 können hierbei im Bereich einer der Druckplatten 32, 34, wie vorliegend beispielhaft gezeigt im Bereich der in Stapelrichtung 28 oberen Druckplatte 32 angeordnet sein. Durch Drehen der Gewindespindeln 58 in eine erste Drehrichtung können die Druckplatten 32, 34 aufeinander zu und durch Drehen der Gewindespindeln 58 in die entgegengesetzte Richtung voneinander weg bewegt werden.

Wird also der in dieser Variante den jeweiligen Elektromotor 56 und die jeweilige Gewindespindel 58 umfassende Aktuator von der Steuerungseinrichtung 36 angesteuert, so kann das Paket 42 mit einer konstanten axialen, also parallel zu der Stapelrichtung 28 wirkenden Presskraft beaufschlagt werden. In analoger Weise wie beispielhaft anhand der Gewindespindeln 58 gezeigt, kann auch mittels Aktuatoren, welche über ein insbesondere elektromotorisch angetriebenes Zahnrad bewegbare Zahnstangen aufweisen, der Abstand der Druckplatten 32, 34 voneinander zur Kompensation von Dickenänderungen der Batteriezellen 14 der Batterie 16 verwendet werden.

In Fig. 6 ist eine Variante der Batterie 16 gezeigt, bei welcher mittels einer von einem Elektromotor 56 angetriebenen Gewindespindel 58 ein Hebelsystem etwa in Form eines Kniehebels 62 betätigt wird. Hierbei sind der Elektromotor 56 und die Gewindespindel 58 zwischen den Druckplatten 32, 34 angeordnet. Demgegenüber sind in Fig. 5 die Elektromotoren 56 außerhalb eines durch die Druckplatten 32, 34 in die Stapelrichtung 28 begrenzten Aufnahmeraums für das Paket 42 angeordnet. Des Weiteren erstreckt sich bei der Variante der Batterie 16 gemäß Fig. 6 die Gewindespindel 58 senkrecht zu der Stapelrichtung 28 während in Fig. 5 die Gewindespindeln 58 parallel zu der Stapelrichtung 28 verlaufen.

Auch bei der Variante gemäß Fig. 6 kann anstelle der Gewindespindel 58 eine Zahnstange oder dergleichen zum Einsatz kommen. Des Weiteren ist es in analoger Weise zu der in Fig. 6 gezeigten Variante der Batterie 16 möglich, den Elektromotor 56 zwischen den beiden Druckplatten 32, 34 anzuordnen und etwa über ein Schneckengetriebe wenigstens eine Gewindespindel 58 anzutreiben, welche dafür sorgt, dass die Druckplatten 32, 34 aufeinander zu beziehungsweise voneinander weg bewegt werden.

Damit keine Halteenergie aufgebracht zu werden braucht, wird bei Varianten, bei welchen die Gewindespindel 58 zum Einsatz kommt, die Gewindespindel 58 vorzugsweise selbsthemmend ausgeführt. Bei Varianten mit der (nicht gezeigten) Zahnstange wird vorzugsweise eine stromlos aktive Verriegelung oder Bremse beziehungsweise Bremseinrichtung vorgesehen.

Um ein ständiges Nachstellen eines steifen Systems wie des in Fig. 5 und Fig. 6 beispielhaft gezeigten Konstantkraftsystems zu verhindern, kann es sinnvoll sein, ein elastisches Element wie etwa eine dünne Spannmatte zwischen dem Paket 42 und wenigstens einer der Druckplatten 32, 34 anzuordnen.

Zusätzlich zu den vorliegend detailliert beschriebenen Varianten sind Kombinationen der vorstehend erläuterten Bewegungsmechanismen möglich. Beispielsweise kann der in Fig. 6 gezeigte Hebelantrieb durch ein Fluidstellersystem wie etwa einen der in Fig. 2 gezeigten pneumatischen Muskeln 30 aktiviert werden.

Das Konstantkraftsystem kann einmalig in einer einzelnen Batteriezelle 14 oder einmalig in der Batterie 16 verbaut sein. Es ist jedoch auch möglich, in einer einzelnen Batteriezelle 14 oder auch in einem Zellstapel wie dem vorliegend beispielhaft gezeigten Paket 42 das Konstantkraftsystem mehrmalig zu verbauen. Wenn beispielsweise in einem Zellblock mit mehreren Batteriezellen 14 jeder einzelnen Batteriezelle 14 ein separates Konstantkraftsystem mit den beiden Druckplatten 32, 34 zugeordnet ist, dann bleiben die Batteriezellen 14 trotz ihrer Dickenänderung in ihrer axialen Position, also an einer konstanten Position bezogen auf die Stapelrichtung 28. Dadurch ergibt sich in vorteilhafter Weise ein konstantes und gleiches Rastermaß.

Alle vorstehend beschriebenen Systeme, welche die beiden aufeinander zu und voneinander weg bewegbaren Druckplatten 32, 34 umfassen, haben den Vorteil, dass es sich um in sich verspannende Systeme handelt. Dementsprechend können Module beziehungsweise Einheiten, welche die Druckplatten 32, 34 und wenigstens eine zwischen den Druckplatten 32, 34 angeordnete Batteriezelle 14 oder das zwischen den Druckplatten 32, 34 angeordnete Paket 42 aufweisen, besonders leicht in ein Batteriegehäuse beziehungsweise in ein Fahrzeug eingebaut werden. Denn die Druckkräfte brauchen nicht an umliegenden Elementen wie dem Batteriegehäuse oder dem Fahrzeug abgestützt zu werden. Dadurch wird insbesondere der Austausch eines solchen Moduls erleichtert.

### Bezugszeichenliste

- 10: Graph
- 12: Ordinate
- 14: Batteriezelle
- 16: Batterie
- 18: Kennlinie
- 20: Abszisse
- 22: Abschnitt
- 24: Abschnitt
- 26: Abschnitt
- 28: Stapelrichtung
- 30: Muskel
- 32: Druckplatte
- 34: Druckplatte
- 36: Steuerungseinrichtung
- 38: Kennlinie
- 40: Pfeil
- 42: Paket
- 44: Kennlinie
- 46: Abschnitt
- 48: Endabschnitt
- 50: Zellrahmen
- 52: Ableiterfahne
- 54: Ableiterfahne
- 56: Elektromotor
- 58: Gewindespindel
- 60: Spindelmutter
- 62: Kniehebel

## Patentansprüche

1. Elektrischer Energiespeicher mit wenigstens einem Elektrodenstapel, welcher eine Mehrzahl von in einer Stapelrichtung (28) übereinander angeordneten Lagen von Elektroden und zwischen den Elektroden angeordneten Separatoren umfasst, mit einer ersten Druckplatte (32) und mit einer zweiten Druckplatte (34) zum Ausüben eines Drucks auf den zwischen den Druckplatten (32, 34) angeordneten wenigstens einen Elektrodenstapel, mit wenigstens einem Aktuator (30, 56, 58, 62) zum Bewegen zumindest einer der Druckplatten (32, 34), und mit einer Steuerungseinrichtung (36) zum Ansteuern des wenigstens einen Aktuators (30, 56, 58, 62), wobei der wenigstens eine Aktuator (56, 58, 62) als mechanische Antriebseinrichtung ausgebildet ist, mittels welcher ein Abstand der Druckplatten (32, 34) voneinander veränderbar ist,
**dadurch gekennzeichnet, dass**
die Druckplatten (32, 34) durch den wenigstens einen Aktuator (30, 56, 58, 62) miteinander gekoppelt sind, wobei durch ein mittels der Steuerungseinrichtung (36) bewirktes Ansteuern des wenigstens einen Aktuators (30, 56, 58, 62) der Abstand der Druckplatten (32, 34) voneinander veränderbar ist, wobei die Antriebseinrichtung eine Gewindespindel (58) und/oder eine Zahnstange aufweist, wobei die Gewindespindel (58) und/oder die Zahnstange dazu ausgebildet ist, durch Betätigen einer Hebeleinrichtung (62) den Abstand der Druckplatten (32, 34) voneinander zu verändern.

2. Elektrischer Energiespeicher nach Anspruch 1,
**dadurch gekennzeichnet, dass**
die Steuerungseinrichtung (36) dazu ausgebildet ist, in Abhängigkeit von einer jeweiligen Dicke des wenigstens einen Elektrodenstapels mittels des wenigstens einen Aktuators (30, 56, 58, 62) über die Druckplatten (32, 34) ein Beaufschlagen des wenigstens einen Elektrodenstapels mit einer im Wesentlichen konstanten Kraft zu bewirken.

3. Elektrischer Energiespeicher nach Anspruch 1 oder 2,
**dadurch gekennzeichnet, dass**
der, insbesondere zwischen den Druckplatten (32, 34) angeordnete, wenigstens eine Aktuator (30, 56, 58, 62) eine Bewegungseinrichtung aufweist oder als Bewegungseinrichtung ausgebildet ist, welche mit der ersten Druckplatte (32) einerseits und mit der zweiten Druckplatte (34) andererseits verbunden ist.

4. Elektrischer Energiespeicher nach einem der Ansprüche 1 bis 3,
**dadurch gekennzeichnet, dass**
der wenigstens eine Aktuator (30) als Fluidsteller mit wenigstens einer Kammer ausgebildet ist, welche zum Aufnehmen und Abgeben eines Fluids in Abhängigkeit von dem einzustellenden Abstand der Druckplatten (32, 34) voneinander ausgebildet ist.

5. Elektrischer Energiespeicher nach einem der Ansprüche 1 bis 4,
**dadurch gekennzeichnet, dass**
der wenigstens eine Aktuator (56, 58, 62) als elektromechanische Antriebseinrichtung ausgebildet ist.

6. Elektrischer Energiespeicher nach einem der Ansprüche 1 bis 5,
**dadurch gekennzeichnet, dass**
die Gewindespindel (58) selbsthemmend ausgebildet ist und/oder die Zahnstange mechanisch verriegelbar ist und/oder die Zahnstange eine Bremseinrichtung aufweist.

7. Elektrischer Energiespeicher nach einem der Ansprüche 1 bis 6,
**dadurch gekennzeichnet, dass**
zwischen dem wenigstens einen Elektrodenstapel und zumindest einer der Druckplatten (32, 34) ein elastisches Element angeordnet ist.

8. Elektrischer Energiespeicher nach einem der Ansprüche 1 bis 7,
**dadurch gekennzeichnet, dass**
die Steuerungseinrichtung (36) dazu ausgebildet ist, in Abhängigkeit von einem Betriebszustand des wenigstens einen Elektrodenstapels den über die Druckplatten (32, 34) auf den wenigstens einen Elektrodenstapel ausgeübten Druck zu verringern, insbesondere auf null zu verringern.

9. Elektrischer Energiespeicher nach einem der Ansprüche 1 bis 8,
**dadurch gekennzeichnet, dass**
der elektrische Energiespeicher als Batteriezelle mit einem Zellgehäuse ausgebildet ist, wobei die Druckplatten (32, 34) und der wenigsten eine Elektrodenstapel innerhalb des Zellgehäuses angeordnet sind, und/oder der elektrische Energiespeicher (16) eine Mehrzahl von zwischen den Druckplatten (32, 34) angeordneten Batteriezellen (14) aufweist, wobei die jeweilige Batteriezelle (14) ein jeweiliges Zellgehäuse mit in dem jeweiligen Zellgehäuse angeordnetem Elektrodenstapel aufweist.

10. Verfahren zum Betreiben eines elektrischen Energiespeichers (16) mit wenigstens einem Elektrodenstapel, welcher eine Mehrzahl von in einer Stapelrichtung (28) übereinander angeordneten Lagen von Elektroden und zwischen den Elektroden angeordneten Separatoren umfasst, bei welchem eine erste Druckplatte (32) und eine zweite Druckplatte (34) einen Druck auf den zwischen den Druckplatten (32, 34) angeordneten wenigstens einen Elektrodenstapel ausüben, und bei welchem eine Steuerungseinrichtung (36) wenigstens einen Aktuator (30, 56, 58, 62) ansteuert, wobei der wenigstens eine Aktuator (30, 56, 58, 62) zumindest eine der Druckplatten (32, 34) bewegt, und wobei der wenigstens eine Aktuator (56, 58, 62) als mechanische Antriebseinrichtung ausgebildet ist, mittels welcher ein Abstand der Druckplatten (32, 34) voneinander verändert wird,
**dadurch gekennzeichnet, dass**
die Druckplatten (32, 34) durch den wenigstens einen Aktuator (30, 56, 58, 62) miteinander gekoppelt sind, wobei durch ein mittels der Steuerungseinrichtung (36) bewirktes Ansteuern des wenigstens einen Aktuators (30, 56, 58, 62) der Abstand der Druckplatten (32, 34) voneinander verändert wird, wobei die Antriebseinrichtung eine Gewindespindel (58) und/oder eine Zahnstange aufweist, und wobei die Gewindespindel (58) und/oder die Zahnstange durch Betätigen einer Hebeleinrichtung (62) den Abstand der Druckplatten (32, 34) voneinander verändert.

## Claims

1. Electrical energy store comprising at least one electrode stack, which has a plurality of layers of electrodes arranged above one another in a stacking direction (28) and separators arranged between the electrodes, comprising a first pressure plate (32) and comprising a second pressure plate (34) for exerting a pressure on at least one of the electrode stacks arranged between the pressure plates (32, 34), comprising at least one actuator (30, 56, 58, 62) for moving at least one of the pressure plates (32, 34), and comprising a control device (36) for controlling the at least one actuator (30, 56, 58, 62), wherein the at least one actuator (56, 58, 62) is designed as a mechanical drive device by means of which the distance between the pressure plates (32, 34) can be changed,
**characterized in that**
the pressure plates (32, 34) are coupled to one another by at least one actuator (30, 56, 58, 62), wherein the distance between the pressure plates (32, 34) can be changed by controlling the at least one actuator (30, 56, 58, 62), which control is effected by the control device (36), wherein the drive device has a threaded spindle (58) and/or a rack, wherein the threaded spindle (58) and/or the rack is designed to change the distance between the pressure plates (32, 34) by actuating a lever device (62).

2. Electrical energy store according to claim 1,
**characterized in that**
the control device (36) is designed to apply a substantially constant force to the at least one electrode stack by means of the at least one actuator (30, 56, 58, 62) via the pressure plates (32, 34), depending on a corresponding thickness of the at least one electrode stack.

3. Electrical energy store according to claim 1 or 2,
**characterized in that**
the at least one actuator (30, 56, 58, 62), arranged in particular between the pressure plates (32, 34), has a movement device or is designed as a movement device which is connected to both the first pressure plate (32) and to the second pressure plate (34).

4. Electrical energy store according to any of claims 1 to 3,
**characterized in that**
the at least one actuator (30) is designed as a fluid regulator having at least one chamber which is designed to receive and dispense a fluid depending on the distance to be set between the pressure plates (32, 34).

5. Electrical energy store according to any of claims 1 to 4,
**characterized in that**
the at least one actuator (56, 58, 62) is designed as an electromechanical drive device.

6. Electrical energy store according to any of claims 1 to 5,
**characterized in that**
the threaded spindle (58) is designed to be self-locking and/or the rack can be mechanically locked and/or the rack has a braking device.

7. Electrical energy store according to any of claims 1 to 6,
**characterized in that**
a resilient element is arranged between at least one of the electrode stacks and at least one of the pressure plates (32, 34).

8. Electrical energy store according to any of claims 1 to 7,
**characterized in that**
the control device (36) is designed to reduce the pressure exerted on the at least one electrode stack, in particular to reduce the pressure to zero, via the pressure plates (32, 34), depending on an operating state of the at least one electrode stack.

9. Electrical energy store according to any of claims 1 to 8,
**characterized in that**
the electrical energy store is designed as a battery cell having a cell housing, wherein the pressure plates (32, 34) and the at least one electrode stack are arranged within the cell housing, and/or the electrical energy store (16) comprises a plurality of battery cells (14) arranged between the pressure plates (32, 34), wherein the corresponding battery cell (14) has a corresponding cell housing having an electrode stack arranged in the corresponding cell housing.

10. Method for operating an electrical energy store (16) comprising at least one electrode stack, which has a plurality of layers of electrodes arranged one above the other in a stacking direction (28) and separators arranged between the electrodes, in which method a first pressure plate (32) and a second pressure plate (34) exert a pressure on the at least one electrode stack arranged between the pressure plates (32, 34), and in which method a control device (36) controls at least one actuator (30, 56, 58, 62), wherein the at least one actuator (30, 56, 58, 62) moves at least one of the pressure plates (32, 34), and wherein the at least one actuator (56, 58, 62) is designed as a mechanical drive device, by means of which the distance between the pressure plates (32, 34) is changed,
**characterized in that**
the pressure plates (32, 34) are coupled to one another by the at least one actuator (30, 56, 58, 62), wherein the distance between the pressure plates (32, 34) is changed by controlling the at least one actuator (30, 56, 58, 62), which control is brought about by the control device (36), wherein the drive device has a threaded spindle (58) and/or a rack, and wherein the threaded spindle (58) and/or the rack changes the distance between the pressure plates (32, 34) by actuating a lever device (62).

## Revendications

1. Accumulateur d'énergie électrique comportant au moins un empilement d'électrodes qui comprend une pluralité de couches d'électrodes superposées dans une direction d'empilement (28) et de séparateurs disposés entre les électrodes, comportant une première plaque de pression (32) et une seconde plaque de pression (34) destinées à exercer une pression sur l'au moins un empilement d'électrodes disposé entre les plaques de pression (32, 34), comportant au moins un actionneur (30, 56, 58, 62) destiné à déplacer au moins l'une des plaques de pression (32, 34), et comportant un dispositif de commande (36) destiné à commander l'au moins un actionneur (30, 56, 58, 62), dans lequel l'au moins un actionneur (56, 58, 62) est conçu comme un dispositif d'entraînement mécanique à l'aide duquel un écartement des plaques de pression (32, 34) l'une de l'autre peut être modifié,
**caractérisé en ce que**
les plaques de pression (32, 34) sont accouplées entre elles par l'au moins un actionneur (30, 56, 58, 62), dans lequel l'écartement des plaques de pression (32, 34) l'une de l'autre peut être modifié par une commande de l'au moins un actionneur (30, 56, 58, 62), laquelle commande est réalisée à l'aide du dispositif de commande (36), dans lequel le dispositif d'entraînement présente une broche filetée (58) et/ou une crémaillère, dans lequel la broche filetée (58) et/ou la crémaillère est conçue pour modifier l'écartement des plaques de pression (32, 34) l'une de l'autre par actionnement d'un dispositif à levier (62).

2. Accumulateur d'énergie électrique selon la revendication 1,
**caractérisé en ce que**
le dispositif de commande (36) est conçu pour entraîner une sollicitation de l'au moins un empilement d'électrodes avec une force sensiblement constante à l'aide de l'au moins un actionneur (30, 56, 58, 62) par l'intermédiaire des plaques de pression (32, 34), en fonction d'une épaisseur respective de l'au moins un empilement d'électrodes.

3. Accumulateur d'énergie électrique selon la revendication 1 ou 2, **caractérisé en ce que**
l'au moins un actionneur (30, 56, 58, 62) disposé en particulier entre les plaques de pression (32, 34) présente un dispositif de déplacement ou est conçu comme un dispositif de déplacement qui est relié d'une part à la première plaque de pression (32) et d'autre part à la seconde plaque de pression (34).

4. Accumulateur d'énergie électrique selon l'une des revendications 1 à 3, **caractérisé en ce que**
l'au moins un actionneur (30) est conçu comme un régulateur de fluide comportant au moins une chambre qui est conçue pour recevoir et distribuer un fluide en fonction de l'écartement à régler des plaques de pression (32, 34) l'une de l'autre.

5. Accumulateur d'énergie électrique selon l'une des revendications 1 à 4, **caractérisé en ce que**
l'au moins un actionneur (56, 58, 62) est conçu comme un dispositif d'entraînement électromécanique.

6. Accumulateur d'énergie électrique selon l'une des revendications 1 à 5, **caractérisé en ce que**
la broche filetée (58) est conçue autobloquante et/ou la crémaillère peut être verrouillée mécaniquement et/ou la crémaillère présente un dispositif de freinage.

7. Accumulateur d'énergie électrique selon l'une des revendications 1 à 6, **caractérisé en ce que**
un élément élastique est disposé entre l'au moins un empilement d'électrodes et au moins l'une des plaques de pression (32, 34).

8. Accumulateur d'énergie électrique selon l'une des revendications 1 à 7, **caractérisé en ce que**
le dispositif de commande (36) est conçu pour réduire, en particulier ramener à zéro, la pression exercée sur l'au moins un empilement d'électrodes par l'intermédiaire des plaques de pression (32, 34), en fonction d'un état de fonctionnement de l'au moins un empilement d'électrodes.

9. Accumulateur d'énergie électrique selon l'une des revendications 1 à 8, **caractérisé en ce que**
l'accumulateur d'énergie électrique est conçu comme une cellule de batterie comportant un boîtier de cellule, dans lequel les plaques de pression (32, 34) et l'au moins un empilement d'électrodes sont disposés à l'intérieur du boîtier de cellule, et/ou l'accumulateur d'énergie électrique (16) présente une pluralité de cellules de batterie (14) disposées entre les plaques de pression (32, 34), dans lequel la cellule de batterie (14) respective présente un boîtier de cellule respectif comportant un empilement d'électrodes disposé dans le boîtier de cellule respectif.

10. Procédé pour faire fonctionner un accumulateur d'énergie électrique (16) comportant au moins un empilement d'électrodes qui comprend une pluralité de couches d'électrodes superposées dans une direction d'empilement (28) et de séparateurs disposés entre les électrodes, dans lequel une première plaque de pression (32) et une seconde plaque de pression (34) exercent une pression sur l'au moins un empilement d'électrodes disposé entre les plaques de pression (32, 34), et dans lequel un dispositif de commande (36) commande au moins un actionneur (30, 56, 58, 62), dans lequel l'au moins un actionneur (30, 56, 58, 62) déplace au moins l'une des plaques de pression (32, 34), et dans lequel l'au moins un actionneur (56, 58, 62) est conçu comme un dispositif d'entraînement mécanique à l'aide duquel un écartement des plaques de pression (32, 34) l'une de l'autre est modifié,
**caractérisé en ce que**
les plaques de pression (32, 34) sont accouplées entre elles par l'au moins un actionneur (30, 56, 58, 62), dans lequel l'écartement des plaques de pression (32, 34) l'une de l'autre est modifié par une commande de l'au moins un actionneur (30, 56, 58, 62), laquelle commande est réalisée à l'aide du dispositif de commande (36), dans lequel le dispositif d'entraînement présente une broche filetée (58) et/ou une crémaillère, et dans lequel la broche filetée (58) et/ou la crémaillère modifie l'écartement des plaques de pression (32, 34) l'une de l'autre par actionnement d'un dispositif à levier (62).
